# EUROPEAN PATENT APPLICATION

(11) **EP 3 690 394 A1**
(43) Date of publication of application: **05.08.2020**
(21) Application number: 19154591.2
(22) Date of filing: 30.01.2019
(51) Int. Cl.: G01C 13/00, G01S 15/89, B63B 35/00

(54) **METHOD FOR MONITORING THE SEABED AND/OR A SUBSEA STRUCTURE**

(71) Applicant: Siemens Gamesa Renewable Energy A/S, 7330 Brande (DK)
(72) Inventor: SOERENSEN, Johnny, 6920 Videbæk (DK)
(74) Representative: Aspacher, Karl-Georg

(57) **Abstract**

Method for monitoring a seabed (1) and/or a subsea structure (2), wherein measurement data concerning the seabed (1) and/or the subsea structure (2) is recorded using at least one sensor (4) attached to a ship (5), wherein a database (29) is provided comprising reference data concerning an expected state of the seabed (1) and/or subsea structure (2) or a state of the seabed (1) and/or subsea structure (2) during at least one previous measurement by the same sensor (4) and/or at least one further sensor, wherein part of the reference data is compared and/or merged and/or replaced with the measurement data concerning the same section of the seabed (1) or subsea structure (2) as that part of the reference data to generate output data (30).

## Description

The invention concerns a method for monitoring a seabed and/or a subsea structure. The invention also concerns a processing system, a computer program and a ship.

Artificial offshore structures that are attached to a seabed are used for a multitude of purposes, e.g. for offshore wind farms or wind turbines and for oil drilling. To ensure the integrity of these offshore structures and attached infrastructure, e.g. subsea cables, subsea structures, e.g. the foundation of a platform or a wind turbine, subsea structures and/or the surrounding seabed should be monitored for changes. It can e.g. be highly relevant to detect a shift of undersea cables, erosion, scour, seabed activities and the development of marine grout to recognise necessary actions to conserve the artificial offshore structure and its infrastructure. A monitoring of a seabed and/or subsea structures can also be relevant for sailing routes into harbours.

For these monitoring tasks a dedicated vessel is hired to perform multi beam or single beam scans along sailing routes, scans of structures to determine the stage of marine grout, offshore cable tracking and/or multi beam surveys of erosion around the structures. Since such a survey necessitates the use of a dedicated vessel for an extended period of time it can be relatively expensive and requires a large amount of resources, e.g. fuel for the vessel. To conserve resources such surveys are typically only performed every year or bi-yearly for most artificial offshore structures.

In many cases it would be advantageous to use shorter times between surveys, since some undesired changes in the seabed or subsea structures can be corrected easier and with less need of resources when they are detected early. Short times between surveys would however massively increase the required resources for these surveys and therefore e.g. CO₂ emissions.

The problem to be solved by the invention is therefore to provide an improved method for monitoring a seabed and/or a subsea structure that especially allows for an earlier detection of relevant information while keeping the amount of resources required for monitoring the seabed and/or subsea structure low.

The problem is solved by a method for monitoring a seabed and/or a subsea structure, wherein measurement data concerning the seabed and/or the subsea structure is recorded using at least one sensor attached to a ship, wherein a database is provided comprising reference data concerning an expected state of the seabed and/or subsea structure or a state of the seabed and/or subsea structure during at least one previous measurement by the same sensor and/or at least one further sensor, wherein part of the reference data is compared and/or merged and/or replaced with the measurement data concerning the same section of the seabed or subsea structure as that part of the reference data to generate output data.

In the method according to the present invention the measurement data is not used by itself to provide a complete survey based only on the measurement data. Instead the measurement data is used in conjunction with reference data. Therefore we suggest to use a prior information in form of the reference data and to use measurement data that can especially concern only certain sections of the seabed and/or the subsea structure in conjunction with this reference data to monitor changes.

As will be discussed in more detail below the acquisition of such measurement data can especially be performed using ships that operate in the relevant area anyway such that no or only a slight modification of the operation of these ships is necessary. This is possible since the inventive method does not require to perform a complete survey of the relevant area of the seabed and/or subsea structure during a single voyage of a single ship. Instead a ship can e.g. only provide data that can be easily acquired during normal operation or with a minimal modification of the operation of this ship. As an example crew transport vessels in wind farms typically travel by a variety of routes through the wind farm. They can therefore easily be used to monitor most of the seabed and/or subsea structure of such a wind farm without modifying their operation schedule at all. The remaining areas of the seabed or subsea structure that are relevant for the monitoring tasks can e.g. be monitored by the same vessels when they are not used for their normal transport duties and/or by separate surveys when necessary.

The reference data can be provided by third parties, e.g. be based on maritime maps and/or construction plans etc. of monitored structures. Additionally or alternatively measurement data from a previous complete survey can be used. It is also possible to use some initial data as initial reference data and then repeatedly use the method according to the present invention to replace respective parts of this initial reference data by measurement data acquired during the respective application of the method. It is especially possible to repeat the method according to the invention with different ships and/or using measurement data acquired during multiple trips of the same ship to merge measurement data acquired from a plurality of sources.

A comparison of the measurement data to the reference data is especially advantageous when changes of the subsea structure or the seabed should be detected. This comparison can be used to automatically generate reports as discussed in detail below. A replacement of the reference data with the measurement data can be used to update the reference data in the section that is actually monitored by the ship. Instead of a complete replacement of the reference data merging can be used that can e.g. be achieved by weighted averaging of the measurement data with the reference data and/or by applying certain conditions, e.g. that there are no discontinuities between replaced data and non-replaced data. This can in the simplest case be accomplished by using a windowing function to merge the measurement data with the reference data and/or by modifying the measurement or the reference data e.g. by matching offsets or slopes.

The reference data can especially be provided at a prior date, e.g. measured at a prior date, e.g. at least a day or a week before the start of the current journey of the ship or in general before the start of the current journey by the ship. It can be acquired by the sensor mounted to the ship during a previous journey, a further sensor mounted to a further ship or merged from several data sources.

The output data can be only used in house, e.g. by an operator of an artificial offshore structure. It can however be advantageous to provide the output data to third parties, e.g. to license modified reference data or reports generated as output data to third parties. This can e.g. be advantageous when sailing routes into harbours are monitored.

At least part of the measurement data can be acquired while the ship is transporting persons and/or cargo to or from an artificial offshore structure and/or while the ship is anchored to the offshore structure and/or while the ship is transporting cargo, especially cargo containers, to or from a harbour. The ship can be a transport vessel, especially a crew transport vessel, for transferring cargo and/or personal to or from an offshore structure. It can also be a freighter, e.g. a container ship, that can e.g. monitor a sailing route into a harbour. Since the measurement data is acquired by a ship operating in the relevant area anyway no or only a small amount of additional resources are needed to perform the monitoring of the seabed and/or subsea structure.

A mechanical movement of the sensor or a modification of operational parameters of the sensor can be used to modify the area from which measurement data is acquired. This can extend the area that can be monitored during the normal operation of the ship, especially when measurement data is acquired while the ship is anchored to an offshore structure. E.g. a crew transfer vessel is pushed against the boat landing during personal transfer to and/or from the offshore structure. During this time a detailed survey of the area around the offshore structure can be performed.

The ship can be used to transport persons and/or cargo to or from an artificial offshore structure during multiple transport runs, wherein separate measurement data is acquired during each of these transport runs, wherein the artificial offshore structure is approached from different directions for at least two of the transport runs. The approach from different directions can be due to performing a transport between different points, e.g. from or to different offshore or onshore structures, or due to a modification of the travel path used for different trips. By approaching the offshore structure from multiple directions a complete mapping of all relevant features can be easily achieved. E.g. foundations of a wind turbine or a platform can be monitored from all directions.

The subsea structure can be part of the or an artificial offshore structure and/or the section of the seabed for which the measurement data is acquired can be used to anchor the artificial offshore structure. The artificial offshore structure can especially be a wind turbine, part of a wind farm or an oil platform. Foundations can e.g. be monopole foundations, jacket foundations, tripod foundations or gravity or suction buckets. The output data can especially concern the wear of the foundation and/or changes in the anchoring area of the seabed.

At least part of the measurement data can be acquired while the ship is travelling within a wind farm and/or while the ship is anchored to a wind turbine. As already discussed the described monitoring can be especially advantageous for monitoring foundations and anchoring areas of the seabed for wind farms or individual wind turbines.

A relevant area of the area of the seabed and/or subsea structure, for which measurement data is to be acquired, can be determined from the database, wherein an acquisition information is generated based on the relevant area, wherein the acquisition information is used to assist a user of the ship in navigating the ship to an acquisition position at which at least part of the measurement data concerning the relevant area can be acquired by the sensor and/or to control an acquisition area from which the measurement data is acquired by mechanically moving the sensor or by modifying at least one operational parameter of the sensor. The database can e.g. comprise information, when a certain area was last monitored and/or how often a certain area should be monitored. It is e.g. possible to choose a relevant area that was not monitored for a time that exceeds a given threshold or that was not monitored for a longer time than all other relevant areas and/or all relevant areas that are relatively close to the ship and/or a planned journey path of the ship. The monitoring of an automatically selected acquisition area can e.g. be performed when the ship would currently not be normally in use for a relatively short amount of time, e.g. being anchored or waiting for the next planned transportation. E.g. the database can be used to automatically advise the captain of a crew transfer vessel in a standby period to support him in navigating to the respective relevant area and therefore to provide a better utilisation of the vessel.

The selection of the relevant area can be based on weather information concerning the relevant area. It can e.g. be known from the weather information that can e.g. be provided by external sources, that severe weather occurred in certain regions and these regions can be selected as relevant areas to ensure that they are monitored as soon as possible after severe weather has occurred.

In the simplest case the assistance to the user to navigate the ship to the acquisition position can be performed by simply outputting the acquisition position, e.g. on a monitor of the ship. It is especially advantageous to combine the position information with additional information, e.g. to provide a map with a marked acquisition position. It would however also be possible to directly control the movement of the ship, e.g. by controlling the rudder and/or the machine, especially after receiving a confirmation of the planned navigation by a user.

The sensor can be especially rotatable around at least one axis. A controller of the ship can control the sensor movement by at least one actor. A variation of the acquired area can also be possible by e.g. using a linear arrangement or an array of multiple sensor elements and varying the amplitudes and/or phases of sent signals, e.g. sonar signals, and/or by modifying the superposition of data received by multiple sensor elements. This can result in a beamforming that is in principle known in prior art for different applications.

The position or the path of at least a section of a subsea cable can be determined from the measurement data or from cable data acquired by a cable sensor mounted to the ship. This position or path could in principle be output as separate data, e.g. as part of a report. It is however advantageous if the reference data stores a reference position and/or path that can be compared and/or merged and/or replaced with a determined position or path to generate output data. This can e.g. be used to update the position or path of a subsea cable in the reference data and/or to generate warnings or reports when the cable is shifted by a certain distance.

When the cable is not buried below the seabed the position or path of the cable can be determined by a multibeam sonar and/or a sidescan sonar. It is especially possible that this multibeam sonar or sidescan sonar is the same sensor used to acquire the measurement data and the position or path can therefore be determined directly from the measurement data.

Preferably the cable data is acquired by a magnetic or an electromagnetic sensor. Magnetic sensors can be passive sensors. Electromagnetic sensors are typically active sensors. Magnetic and electromagnetic sensors that can be used to detect extended conductive structures and/or currents, especially DC currents, are well known and will not be described in detail.

In the method according to the present invention it is possible that new measurement data is acquired in relatively short intervals. It can therefore be a laborious process to check the output data each time new measurement data is acquired. It can therefore be advantageous to automatically notify a user when relevant changes in the seabed or the subsea structure are detected and/or to automatically generate reports concerning such changes.

It can be advantageous when a reporting condition concerning the difference between the state of the seabed and/or the subsea structure according to the reference data and the state of the seabed and/or the subsea structure according to the measurement data and/or the cable data is evaluated and a report for a supervisor or supervising system is automatically generated when the reporting condition is fulfilled. The report can be the output data, comprising at least part of the output data or be part of the output data. Such a report can e.g. be generated to warn a supervisor or inform a supervising system about strong seabed activity, wear of the subsea structure or the seabed in an anchoring region and/or a shifting of subsea cables. The generated report can be sent to a specified repository or a work station to allow a supervisor to quickly see relevant events and reports. It can also be addressed to a certain supervisor or group of supervisors and send e.g. by e-mail or to a mobile device, e.g. a smartphone running a monitoring app. The proposed automatic reporting can be used to filter the output for a user and therefore allows a simple and very efficient overview with limited personal requirements.

The reporting condition can compare a measure of difference between the state of the seabed and/or the subsea structure according to the reference data and the state of the seabed and/or the subsea structure according to the measurement data and/or the cable data to a threshold value to determine whether the reporting condition is fulfilled. Such a measure for the difference can e.g. be the maximum change of elevation of the seabed due to erosion, the maximum shifting distance of a cable, an average shifting distance or hight difference or similar measures. It is also possible to use a multitude of conditions or thresholds to determine whether a report should be generated.

The or a report to the or a supervisor or the or a supervising system can be generated that comprises a graphical representation visualizing the differences between the state of the seabed and/or the subsea structure according to the reference data and the state of the seabed and/or the subsea structure according to the measurement data and/or the cable data. The graphical representation can only visualize the parts of the data that are relevant for a report, e.g. only the path of a subsea cable or the shift of a subsea cable could be reported. It is also possible to show a full mapping of the relevant area, e.g. a pseudo 3D image of the seabed and/or the subsea structure. Areas where an elevation or shape of the seabed and/or subsea structure did change can be marked, e.g. by color coding or texturing these regions. It is e.g. possible to mark strong changes with a red color and areas where no or small changes appear with a green or blue color. Alternatively it would be possible to superimpose semi transparent or even solid renderings of the measurement data and the reference data. This can e.g. be useful when a shift of a subsea cable should be visualized.

The sensor can be a multibeam sonar mounted to the ship. A multibeam sonar, also called multibeam echo sounder, is a type of sonar that emits sound with a fan shape beneath the ships hull and uses beamforming to extract directional information from the returning sound waves. Multiple depth readings can therefore be acquired with a single ping. In principle it would also be possible to use a sidescan sonar as a sensor.

The database and/or the automatic generation of the report can be implemented by a data processing system that is part of an onshore structure or an artificial offshore structure separate from the ship. This is especially advantageous when measurement data is acquired by multiple ships and when parts of the reference data are then compared and/or merged and/or replaced with these multiple sets of measurement data. The use of a processing system that is separate from the ship also allows to limit the modifications necessary to a certain ship to participate in the method. In the simplest case only the sensor and its immediate control electronics and basic means for storing or transmitting the measurement data needed to be installed on the ship. The data exchange between the ship and the processing system can be achieved by wireless communication, e.g. by well known protocols for data exchange via radio or mobile phone. It is however also possible to temporarily store measurement data and/or data concerning areas to be measured on a local memory on the ship and only transfer the data when the ship reaches certain points in its voyage, e.g. a certain offshore structure or an onshore structure like a port. Data exchange can in this case be performed by cable or by exchanging a memory device, e.g. a memory stick.

The invention also concerns a processing system configured to provide the database and/or comprising a processor configured to compare and/or merge and/or replace at least part of the reference data with the measurement data concerning the same section of the seabed or subsea structure as that part of the reference data to generate the output data in the method according to the present invention. The processing system can also be configured to provide further processing steps as previously discussed with respect to the inventive method. Especially the processor can be configured to determine the relevant area and/or the acquisition information as previously discussed. It can also be configured to determine the position or path of at least a section of a subsea cable from the measurement data or from cable data as previously discussed. Additionally or alternatively the processing system can be configured to generate automatic reports and/or reports comprising a graphical representation visualizing the difference between the state of the seabed and/or the subsea structure according to the reference data and the state of the seabed and/or the subsea structure according to the measurement data and/or the cable data as previously discussed with respect to the inventive method.

The invention also concerns a computer program that can be directly loaded into a memory of a processing system, the computer program providing the database and/or comprising instructions for performing the comparison and/or the merging and/or the replacement of at least part of the reference data with the measurement data concerning the same section of the seabed or subsea structure as that part of the reference data to generate the output data in the inventive method. The computer program can also comprise instructions for performing the further processing tasks discussed with respect to the inventive method and/or the inventive processing system.

Additionally the invention concerns a computer-readable storage medium containing electronically readable instructions comprising the computer program according to the invention. The invention also concerns a ship comprising a sensor attached to the ship, that is configured to provide measurement data in the inventive method. The ship can especially be a crew transport vehicle.

Specific embodiments of the invention will be described in detail herein below with reference to the figures wherein the figures show schematically:
- Fig. 1: the monitoring of a seabed and a subsea structure in an embodiment of the method according to the present invention,
- Fig. 2: the use of another embodiment of the method according to the present invention to monitor a larger area of interest,
- Fig. 3: a flow chart of another embodiment of a method according to the present invention,
- Fig. 4: an embodiment of a processing system according to the present invention, and
- Figs. 5 and 6: exemplary graphical representations generated as a part of a report in an embodiment of the method according to the present invention.

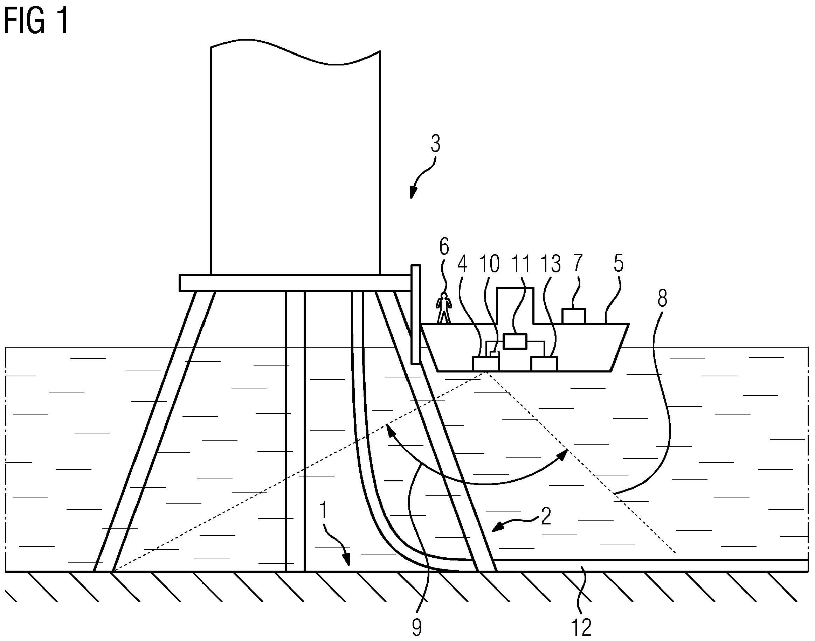

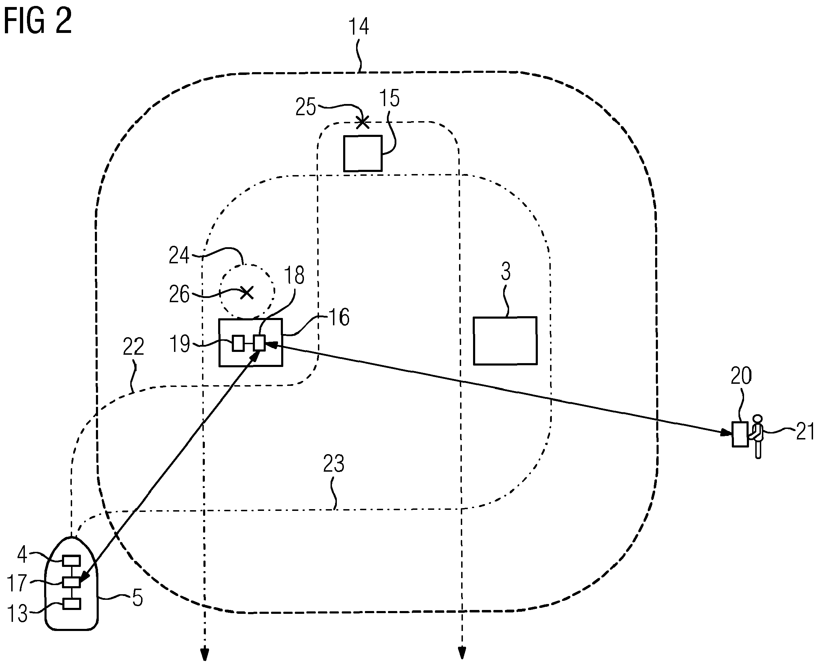

Fig. 1 shows the monitoring of a seabed 1 and a subsea structure 2, in the example the foundation of an artificial offshore structure 3, e.g. a wind turbine, using a sensor 4 mounted to a ship 5. In the example the ship 5 is anchored to the offshore structure 3 while acquiring measurement data and the acquisition of measurement data is performed while a person 6, especially personal of the offshore structure 3, and/or cargo 7 are transferred from the ship 5 to the offshore structure 3 or vice versa. As will be discussed in more detail with reference to fig. 2 additionally or alternatively measurement data can also be acquired while the ship 5 is travelling, e.g. to transport persons 6 or cargo 7 to or from the artificial offshore structure 3.

The sensor 4 is a multibeam sonar mounted to the ship 5. A multibeam sonar radiates a fan shaped pattern 8 of sound towards the seabed 1 and uses beamshaping techniques to acquire multiple depths measurements with one sonar ping. As schematically shown in fig. 1 by the arrow 9, the pattern 8 can be swept to acquire data from an extended area while the ship 5 is anchored to an offshore structure 3 or moving. Alternatively the pattern 8 could be swept by using an actor 10 to mechanically move the sensor 4 and therefore the pattern 8.

As shown in fig. 1 the ship 5 can only acquire measurement data concerning parts of the subsea structure 2 and the seabed 1 while the ship 5 is anchored to the offshore structure 3. Analyzing only this measurement data by itself could therefore only provide limited information. In the described method a processing system 11 is therefore used that provides a database comprising reference data concerning an expected state of the seabed 1 and/or subsea structure 2 or a state of the seabed 1 and/or subsea structure 2 during at least one previous measurement that was either performed by the same sensor 4 or by another sensor, especially by another sensor placed on a different ship. Preferably the reference data describes a larger section of the subsea structure 2 and/or the seabed 1 than the measurement data.

In one possible embodiment of the method the measurement data can be used to update the reference data. To achieve this, the part of the reference data that corresponds to the measurement data is merged or replaced with the measurement data to generate output data that can be used as new reference data. If this process is repeated by various ships and/or by the same ship e.g. when approaching the offshore structure 3 from different directions, most or all of the reference data can be regularly updated. Since this approach to updating the reference data can achieve noticeably fast update rates than regular complete surveys of the area of the offshore structure 3, the monitoring can be noticeably improved without requiring large amounts of additional resources.

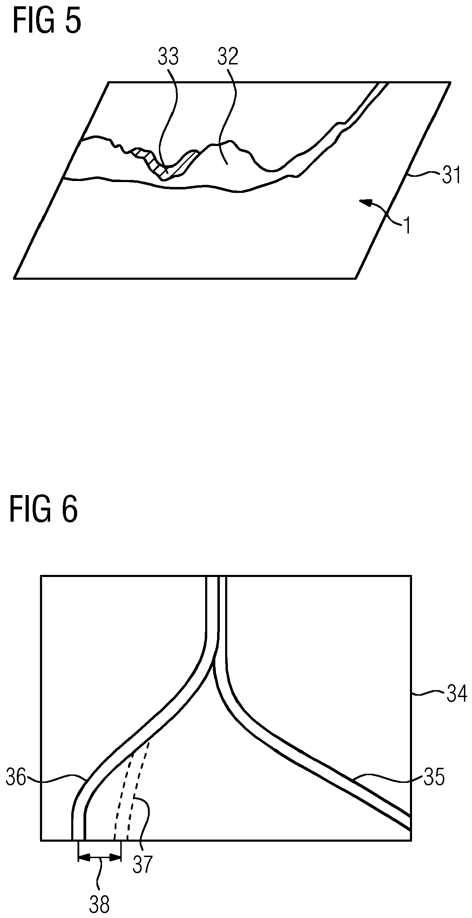

Additionally or alternatively the measurement data can be compared to the reference data. The processing system 11 can automatically generate a report when a sufficiently strong change of the seabed 1 or the subsea structure 2 is detected. For this purpose the processing system 11 can evaluate if a reporting condition is fulfilled. This condition can depend on the difference between the state of the seabed 1 and/or the subsea structure 2 according to the reference data and the state of the seabed 1 and/or the subsea structure 2 according to the measurement data. E.g. an amount of erosion or scour at or around the offshore structure 2 and/or the amount of elevation changes in the seabed 1 can be compared to a respective threshold and the reporting condition can be fulfilled when one of these thresholds is exceeded by the respective value. In the simplest case the report can be a simple alert to a supervisor or a supervising system informing the supervisor or supervising system that such a threshold was exceeded. It is however advantageous to generate a graphical representation visualizing the differences between the state of the seabed 1 and/or the subsea structure 2 according to the reference data and the state of the seabed 1 and/or the subsea structure 2 according to the measurement data. This will be discussed in more detail later with reference to the figures 5 and 6.

While it is highly relevant to monitor changes in the seabed 1 and the subsea structure 2, the method can also advantageously be used to monitor the position or the path of at least a section of subsea cable 12. When the subsea cable 12 is not buried as shown in fig. 1 it is possible to directly determine this position or path from the measurement data, since the cable can then be detected by sonar. It can however be advantageous to use a separate cable sensor 13 to detect cable data and to determine the position or path of the cable 12 from this data. The cable sensor 13 can be a magnetic or an electromagnetic sensor. Using this kind of separate sensor allows for a robust detection of the position and/or path of the cable 12, even when the cable 12 is buried beneath the seabed 1.

A tracking of the cable 12 can either be performed while the ship 5 is stationary at the offshore structure 3 or while the ship is moving. The position or path of the cable 12 can also be stored in the reference data and then replaced, merged or compared with the position or path of the cable 12 determined from the measurement data or the cable data. The comparison of the position or path of the cable between these data sets can especially be used to automatically generate a report if a strong shift of the cable 12 is detected.

A slightly more complex example for monitoring the seabed and subsea structures within a wind farm 14 is now discussed with reference to fig. 2. A ship 5, especially a crew transfer vehicle, is used to transport persons and/or cargo to and from various artificial offshore structures 3, 15, 16, namely wind turbines, within the wind farm 14. While the ship 5 is travelling within the wind farm 14, measurement data is acquired by the sensor 4 and the cable sensor 13 as already discussed with respect to fig. 1. The ship 5 will normally operate within the wind farm 14 each day. It is also possible to use multiple ships operating within the wind farm 14 to collect measurement data. To allow for an easier collection of measurement data provided by a multitude of ships 5 instead of a processing system 11 located on the ship 5 itself a processing system 19 based on one of the offshore structure 16 is used to provide the database and to compare and/or merge and/or replace at least part of the reference data with the measurement data to provide the output data as already discussed with respect to fig. 1. Therefore the ship 5 and the offshore structure 16 each comprise communication modules 17, 18 to allow an exchange of data e.g. via mobile phone protocols or via radio protocols.

Since the ship 5 or ships 5 operate in the wind farm 14 on a daily basis performing a multitude of transports, they will travel along a multitude of paths 22, 23 through the wind farm 14. For reasons of clarity only two of these paths 22, 23 are shown in fig. 2. Since the sensor 4 and the cable sensor 3 can only aggregate data from a certain area surrounding the respective paths 22, 23, using different paths 22, 23 for different transport runs will lead to an acquisition of measurement data for different areas of the wind farm 14 during each of the transport runs or voyages of the ship 5 or ships 5. If all of these sets of measurement data are transferred to the processing system 19 and merged with the reference data or used to replace the respective parts of the reference data to generate respective output data, this output data can be used as updated reference data and all or at least most of the reference data describing the state of the seabed and/or the subsea structures, especially the foundations of the offshore structures 3, 15, 16, can be updated over time. Therefore survey data of the wind farm 14 can be continuously updated.

The same process can also be used to quickly generate automatic reports when certain changes are detected. If the measurement data acquired during each of the transport runs is compared to the corresponding reference data, large changes, e.g. a shifting of a subsea cable or a strong erosion in certain areas can be easily detected and reported as previously discussed.

As already seen from the two paths 22, 23 that are shown in fig. 2, a natural movement of the ship 5 or ships 5 between the offshore structures 3, 15, 16 and/or a slight modification of the planning of the travel paths 22, 23 can ensure that the offshore structures 3, 15, 16 are approached from different directions during the different transport runs. This is especially useful to acquire measurement data showing subsea structures 2 or complex structures on the seabed 1 from several directions.

As previously discussed reports concerning changes in the seabed 1 or the subsea structures 2 can be automatically generated. These can then be sent to a supervisor 21 that can be based onshore. E.g. the communication unit 18 can transmit respective reports to a communication device 20 of the supervisor 21, e.g. a mobile phone running a reporting application. Additionally or alternatively reports could be sent to a supervising system, e.g. a server of the operator of the windfarm 14 and could then be manually or automatically evaluated.

While the normal travel of the ship 5 or ships 5 is typically sufficient to monitor the complete area of the wind farm 14, the processing system 19 can evaluate the database to recognize relevant areas 24 that might require additional monitoring. Such relevant areas 24 might be located in an area that is hard to detect from the normal travel paths 22, 23 or additional investigation might be required, e.g. due to severe weather activities in that area 24. In most wind farms 14 ships 5 that are used to transfer persons and/or cargo between offshore structures 3, 15, 16 and/or onshore structures are idle during certain standby periods, e.g. while waiting between transfers at a certain position 25. Due to the two-way communication between the ships 5 and the processing system 19 the processing system 19 can recognize such standby periods and use these to collect measurement data from the relevant area 24. This can be achieved by generating acquisition information based on the relevant area 24 that is used to assist the user of the ship in navigating the ship to an acquisition position 26 at which at least part of the measurement data concerning the relevant area 24 can be acquired by the sensor 4. If the ship 5 is already sufficiently close to the relevant area 24 or additionally to the navigation to the acquisition position 26 the sensor 4 can be mechanically moved or its parametrisation can be adjusted to improve the acquisition of the relevant area 24.

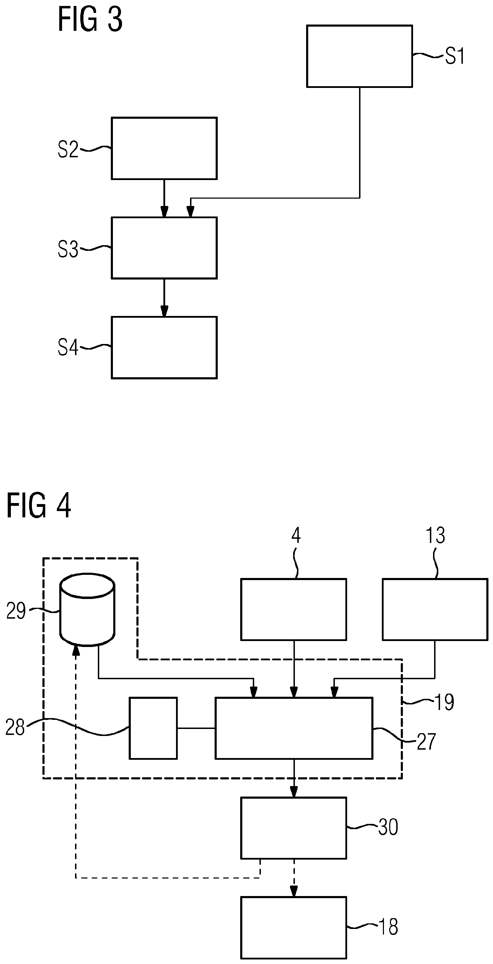

Fig. 3 shows a flow chart of a simple example of the discussed method for monitoring a seabed and/or a subsea structure. In step S1 reference data is provided. In step S2 the sensor 4 of the ship 5 is used to acquire measurement data. In step S3 the reference data that corresponds to this measurement data is replaced and/or merged and/or compared with this reference data to provide output data. In step S4 this output data can optionally be further process, e.g. used as updated reference data and/or an automatic report can be generated. Details of the various steps and further possible features that could be added to this simple method where already discussed with respect to the previous examples.

Fig. 4 shows a detailed view of a possible embodiment of the processing system 19 used in the example according to fig. 2 and its interaction with the further relevant components. The processing system 19 comprises a processor 27 that is configured to accept measurement data from the sensor 4 and optionally from the cable sensor 13 and to merge, replace and/or compare the corresponding part of provided reference data with this measurement data. The processor 27 can be programmable and a computer program that implements these functions can be loaded into the memory 28 of the processing system 19. The processing system 19 is also configured to provide the database 29. The database 29 is shown as a separate component but could be implemented by storing the respective data in the memory 28 or a separate memory and accessing the database by the processor 27 according to instructions of a loaded computer program. The discussed implementation using a programmable processor, e.g. a CPU or FPGA, is purely exemplary. It could also be possible to e.g. use an application specific integrated circuit. The output data 30 generated by the processor 27 can then be further processed, e.g. written back into the database 29 as new reference data or sent via the communication unit 18 to a different system or a supervisor.

As previously discussed generated reports can comprise a graphical representation 31 visualizing the differences between the state of the seabed 1 and/or the subsea structure 2 according to the reference data and the state of the seabed 1 and/or subsea structure 2 according to the measurement data. An example of such a graphical representation 31 is shown in fig. 5. The graphical representation 31 shows a ridge 32 formed on a seabed 1. The shown graphical representation can be based on the reference data or the measurement data or a merged data set generated by merging the measurement data with the reference data. An area 33 in which a height of the ridge 32 is strongly reduced in the measurement data when compared to the reference data is highlighted, e.g. by using a different color or texture for this area 33. It is therefore instantly possible for a supervisor to see strong changes of the seabed 1 or the subsea structure.

Fig. 6 shows a further example of such a graphical representation 34. This graphical representation 34 shows the path of two subsea cables 35, 36 in the measurement data or the separately acquired cable data. To visualize the differences between these paths and the paths described in the reference data, the path 37 extracted from the reference data is additionally displayed. The report is automatically generated, since the distance 38 between the path 37 according to the reference data and the path of the cable 36 in the measurement data or cable data is larger than a threshold.

Although the present invention has been described in detail with reference to the preferred embodiment, the present invention is not limited by the disclosed examples from which the skilled person is able to derive other variations without departing from the scope of the invention.

## Claims

1. Method for monitoring a seabed (1) and/or a subsea structure (2), wherein measurement data concerning the seabed (1) and/or the subsea structure (2) is recorded using at least one sensor (4) attached to a ship (5), **characterized in that** a database (29) is provided comprising reference data concerning an expected state of the seabed (1) and/or subsea structure (2) or a state of the seabed (1) and/or subsea structure (2) during at least one previous measurement by the same sensor (4) and/or at least one further sensor, wherein part of the reference data is compared and/or merged and/or replaced with the measurement data concerning the same section of the seabed (1) or subsea structure (2) as that part of the reference data to generate output data (30).

2. Method according to claim 1, **characterized in that** at least part of the measurement data is acquired while the ship (5) is transporting persons (6) and/or cargo (7) to or from an artificial offshore structure (3, 15, 16) and/or while the ship (5) is anchored to the artificial offshore structure (3, 15, 16) and/or while the ship (5) is transporting cargo (7), especially cargo containers, to or from a harbour.

3. Method according to claim 2, **characterized in that** the ship (5) is used to transport persons (6) and/or cargo (7) to or from an artificial offshore structure (3, 15, 16) during multiple transport runs, wherein separate measurement data is acquired during each of these transport runs wherein the artificial offshore structure (3, 15, 16) is approached from different directions for at least two of the transport runs.

4. Method according to one of the preceding claims, **characterized in that** the subsea structure (2) is part of the or an artificial offshore structure (3, 15, 16) and/or **in that** the section of the seabed (1) for which the measurement data is acquired is used to anchor the artificial offshore structure (3, 15, 16).

5. Method according to one of the preceding claims, wherein at least part of the measurement data is acquired while the ship (5) is traveling within a wind farm (14) and/or while the ship (5) is anchored to a wind turbine.

6. Method according to one of the preceding claims, **characterized in that** a relevant area (24) of the seabed (1) and/or subsea structure (2), for which measurement data is to be acquired, is determined from the database, wherein an acquisition information is generated based on the relevant area (24), wherein the acquisition information is used to assist a user of the ship (5) in navigating the ship (5) to an acquisition position (26) at which at least part of the measurement data concerning the relevant area (24) can be acquired by the sensor (4) and/or to control an acquisition area from which the measurement data is acquired by mechanically moving the sensor (4) or by modifying at least one operational parameter of the sensor (4).

7. Method according to one of the preceding claims, wherein the position or the path of at least a section of a subsea cable (12, 36, 37) is determined from the measurement data or from cable data acquired by a cable sensor (13) mounted to the ship.

8. Method according to claim 7, wherein the cable data is acquired by a magnetic or an electromagnetic sensor.

9. Method according to one of the preceding claims, wherein a reporting condition concerning the difference between the state of the seabed (1) and/or the subsea structure (2) according to the reference data and the state of the seabed (1) and/or the subsea structure (2) according to the measurement data and/or the cable data is evaluated and a report for a supervisor (21) or supervising system is automatically generated when the reporting condition is fulfilled.

10. Method according to one of the preceding claims, **characterized in that** the or a report to the or a supervisor (21) or the or a supervising system is generated that comprises a graphical representation (31, 34) visualizing the differences between the state of the seabed (1) and/or the subsea structure (2) according to the reference data and the state of the seabed (1) and/or subsea structure (2) according to the measurement data and/or the cable data.

11. Method according to one of the preceding claims **characterized in that** the sensor (4) is a multibeam sonar mounted to the ship (5).

12. Method according to one of the preceding claims **characterized in that** the database (29) and/or the automatic generation of the report is implemented by a data processing system (19) that is part of an onshore structure or an artificial offshore structure (16) separate from the ship (5).

13. Processing system configured to provide the database (29) and/or comprising a processor (27) configured to compare and/or merge and/or replace at least part of the reference data with the measurement data concerning the same section of the seabed (1) or subsea structure (2) as that part of the reference data to generate the output data (30) in the method of one of the preceding claims.

14. Computer program that can be directly loaded into a memory (28) of a processing system (19), the computer program providing the database (29) and/or comprising instructions for performing the comparison and/or the merging and/or the replacement of at least part of the reference data with the measurement data concerning the same section of the seabed (1) or subsea structure (2) as that part of the reference data to generate the output data (30) in the method of one of the claims 1 to 12 when the program is executed on the processing system (19) .

15. Ship comprising a sensor (4) attached to the ship (5), configured to provide the measurement data in a method according to one of the claims 1 to 12.
